Europäisches Patentamt

**European Patent Office**

Office européen des brevets

(19)

(11) Publication number : **0 481 805 A2**

# (12) EUROPEAN PATENT APPLICATION

(21) Application number : **91309624.4**

(22) Date of filing : **17.10.91**

(51) Int. Cl.⁵ : **B29D 30/10**

(30) Priority : **18.10.90 JP 277646/90**

(43) Date of publication of application :
**22.04.92 Bulletin 92/17**

(84) Designated Contracting States :
**DE ES FR GB IT**

(71) Applicant : **Bridgestone Corporation
10-1, Kyobashi 1-Chome Chuo-Ku
Tokyo 104 (JP)**

(72) Inventor : **Kobayashi, Norio, c/o Bridgestone
Corporation
Technical Center, 1-1, Ogawahigashi-cho
3-chome
Kodaira City, Tokyo (JP)**
Inventor : **Sakaguchi, Fusatoshi, c/o
Bridgestone Corporation
Technical Center, 1-1, Ogawahigashi-cho
3-chome
Kodaira City, Tokyo (JP)**
Inventor : **Ando, Kunihito, c/o Bridgestone
Corporation
Technical Center, 1-1, Ogawahigashi-cho
3-chome
Kodaira City, Tokyo (JP)**

(74) Representative : **Whalley, Kevin et al
MARKS & CLERK 57/60 Lincoln's Inn Fields
London WC2A 3LS (GB)**

(54) **Methods of producing green case and green tire and tires produced by these methods.**

(57) A method of producing a green case (10) uses an annular core (12) separable into parts and having a radial cross-sectional shape substantially equal to the inner circumferential shape in radial cross-section of a tire to be formed. The method includes steps of applying tire constituent members (28) onto the annular core, spirally winding a continuous carcass ply cord (34) around a closed annular axis of the annular core, applying a coating rubber (36) on the spirally wound carcass ply cord, applying bead wires (40) onto both sides of the equatorial plane of the annular core, cutting the above members applied to the annular core along the inner circumferential surface of the annular core, and turning up the cut portions of the members around the bead wires to form a green case. In a method of producing a green tire (52), other tire constituent members such as sidewalls (46) and a tread rubber (44) are applied to the green case to form a green tire. The annular core is removed from the green case before or after vulcanizing the green tire.

FIG. 1

This invention relates to methods of producing green cases and green tires, respectively, and more particularly to tires produced by these methods, whose uniformity is improved.

In order to produce pneumatic radial tires, radially expansible and contractible cylindrical drums, so-called flat drums have been used. Onto the outer circumference of the flat drum are applied substantially sheet-shaped members such as inner liners, coating rubbers, chafers, carcass plies and the like, while on both the ends of the drum are applied annular members such as bead wires having or not having bead fillers. The flat drum is then expanded radially outwardly to form a green case. Thereafter, a belt and a tread rubber are applied to the crown portion of the green case and the entire is then vulcanized.

In the method of the prior art using the flat drum, however, the respective members, particularly cord angles of carcass plies arranged at predetermined angles relative to a tire equatorial plane are likely to be disturbed and the belt tends to shift to be eccentric due to expansion of the drum and pressure in vulcanization. These disturbance of the members detrimentally affects the uniformity of tires to be produced. It had been ascertained in experiments that the tire skeleton members including reinforcing members such as the carcass plies, belt and the like take about 50% of the influence on the tire uniformity, while the tire skeleton members except the belt or the tire case having the carcass plies, beads and the like take about 50% of the influence on the uniformity.

On the other hand, a method of forming green tires was disclosed in Japanese Patent Application Laid-open No. 56-75,846. In this method, an annular core member is used which has a sectional shape corresponding to the radial sectional shape of a tire to be formed and made of a material which melts or sublimes at a temperature lower than the vulcanizing temperature of a rubber. Belt-shaped ply constituent members including a plurality of cords arranged in parallel with one another are spirally wound around a closed annular axis of the annular core member to form a ply, and respective members constituting outer portions of the tire such as a tread, sidewalls and the like are then applied onto the spirally wound members. Thereafter, the core member is melted or sublimed so as to flow out of the assembled members to form a green tire having a circular shape in radial cross-section. Moreover, another method was disclosed in United States Patent Nos. 3,606,921 and 3,776,792 wherein a tire was formed by spirally winding a continuous ply cord instead of the belt-shaped ply constituent members.

With the methods using the core member having the sectional shape substantially equal to the radial cross-sectional shape of the tire to be formed and spirally winding ply constituent members or ply cords on the core member, the ply constituent members and a belt can be arranged in expected shapes and desired positional relationship in better conditions in comparison with the method using the flat drum. Therefore, these methods using the core member are superior in improvement of tire uniformity. However, the core member is required to be melted or sublimed in order to remove it from a green tire. Consequently, a great many core members are needed and a separate apparatus for producing the core members are required. Moreover, as the carcass ply has a closed sectional shape, it encounters another problem that conventional rims could not be used.

It is an object of the invention to provide improved methods of producing green cases and green tires, which methods guarantee good uniformity of tires to be produced and permit a core member to be repeatedly used keeping the advantages of spirally winding ply members around the core member having a radial cross-section substantially equal to a radial cross-sectional shape of the tires to be produced, and which methods produce tires capable of using conventional rims.

In order to accomplish this object, in the method of producing a green case by applying predetermined tire constituent members to an annular core having a radial cross-sectional shape substantially equal to the inner circumferential shape in radial cross-section of a tire to be formed, the method according to the invention comprises steps of applying predetermined tire constituent members to be positioned radially inwardly of a carcass onto a dividable annular core, spirally winding a continuous carcass ply cord around a closed annular axis of the annular core, applying a coating rubber on the spirally wound carcass ply cord, applying bead wires onto portions of the coating rubber on both sides of the equatorial plane of the annular core, cutting the above members applied to the annular core along the inner circumferential surface of the annular core, and turning up the cut portions of the members around the bead wires to form a green case.

According to the method of producing a green tire, other tire constituent members such as sidewall rubbers and a tread rubber are applied onto the green case thus formed in predetermined positions to form a green tire.

According to the invention, predetermined members such as inner liners, chafers and the like are applied to the annular core separable and having a sectional shape substantially equal to the inner circumferential shape of a tire to be formed in radial cross-section, and after the ply cords are spirally wound to form the carcass, these members are cut along the inner circumferential surface of the annular core, whose cut portions are turned up around the bead wires to form a green case. Therefore, the tire constituent members including the ply cords are not subjected to large deformation in producing the green case. Moreover, as the green case opens at radially inner side to form a horseshoe-shape in cross-section, the annular core positioned in the green case can be readily taken out of the green case by disassembling the annular core.

Other members such as sidewalls, tread rubber, belt and the like are applied to the green case thus formed to form a green tire. The green tire is vulcanized to form a tire whose members are arrange substantially in predetermined positions. Therefore, the tire produced according to the invention is superior in uniformity. The annular core may be disassembled and removed from the tire after the vulcanization.

In order that the invention may be more clearly understood, preferred embodiments will be described, by way of example, with reference to the accompanying drawings.

Fig. 1 is a radial cross-section of a green case produced by a method according to the invention;

Fig. 2a is a plan view illustrating an annular core preferably used in the method according to the invention;

Fig. 2b is an explanatory view illustrating part of the annular core on an enlarged scale;

Fig. 2c is a side view illustrating part of a connecting unit viewed in a direction shown by arrows IIc-IIc in Fig. 2b;

Figs. 3a-3e and Fig. 3g are explanatory views for explaining the method according to the invention;

Fig. 3f is a partial sectional view for explaining a groove formed in the radial inner surface of the annular core according to the invention; and

Fig. 4 is a sectional view illustrating a green case including bead wires having different diameters according to the invention.

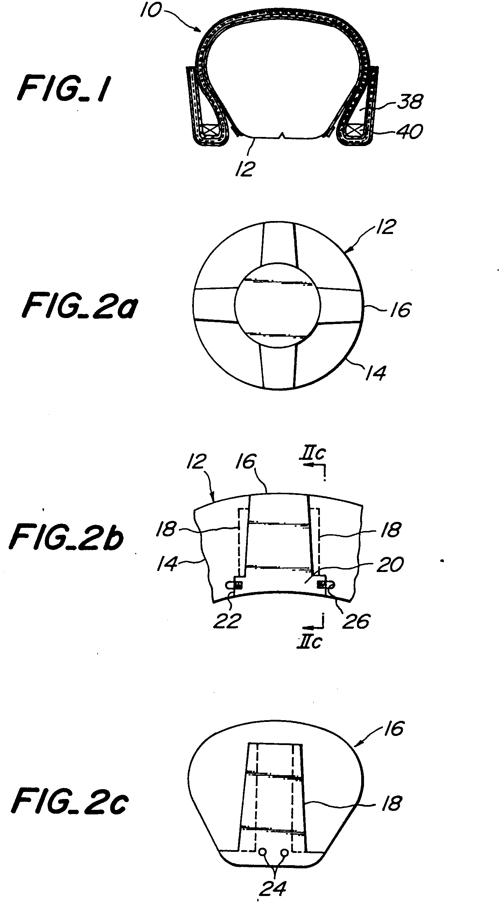

Fig. 1 schematically illustrates in a radial section a green case formed by the method according to the invention. An annular core 12 used to form the green case has a sectional shape in a radial direction substantially the same as the inner circumferential surface shape in a radial direction of a green tire to be formed and hence a tire to be formed from the green tire as clearly shown in Fig. 2a.

The annular core 12 comprises four core main bodies 14 and four connecting units 16 alternately arranged in a circle in this embodiment. These core main bodies 14 and the connecting units 16 include dovetail joints 18 in joint surfaces of them extending in radial directions of the annular core 12. The dovetail joints restrain relative movements between the adjacent core main bodies 14 and the connecting units 16, while permit the annular core 12 to be divided into the core main bodies 14 and the connecting units 16 if required. Therefore, when the connecting units 16 are moved relatively to the annular core 12 radially inwardly, the connecting units 16 are disconnected from the core main bodies 14 to divide the annular core 12 into the core main bodies 14 and the connecting units 16, or they are connected to form the annular core 12, if required.

As clearly shown in Fig. 2b illustrating part of the annular core 12 on an enlarged scale, the connecting units 16 are tapered radially outwardly of the annular core 12, so that the annular core 12 is easily assembled into an annular shape by connecting the core main bodies 14 by the connecting units 16.

While the dovetail joints of each connecting unit 16 on the sides of the adjacent core main bodies 14 extend in parallel with each other in the above embodiment, it will be apparent that so long as dovetail joints of at least one of the connecting units 16 are parallel to each other, the dovetail joints of remaining connecting units 16 may extend substantially in parallel with the tapered joint surfaces of the connecting units 16 and the core main bodies 14.

As shown in the side view of Fig. 2c viewed in the direction shown by arrows IIc-IIc in Fig. 2b, the dovetail joints 18 of each connecting unit 16 are tapered radially outwardly as shown in such a drawing in this embodiment. In stead thereof, the dovetail joints 18 of each connecting unit 16 may extend in parallel with each other.

As shown in Fig. 2b, each connecting unit 16 is formed with a flange 20 on the arcuate radially inward portion forming part of the annular core, while the adjacent core main bodies 14 are formed with recesses 22 in positions corresponding to the flange 20 and having a shape in a mating fitting relationship with the flange 20. Therefore, in assembling the connecting units 16 and the core main bodies 12, the flanges 20 of the connecting units 16 are fitted in the recesses 22 of the core main bodies 14 to ensure the predetermined positional relationship between the connecting units 16 and the core main bodies 14. However, connecting units not having flanges and core main bodies not having recesses may of course be applicable to the invention, although somewhat inferior to those of the shown embodiment in positioning thereof.

In order to maintain the assembled core main bodies 14 and the connecting units 16 as a unitary body, the connecting units 16 are provided at the flanges 20 with spring-loaded pins 24 directing to the joint surfaces of the adjacent core main bodies 14, while the core main bodies 14 are formed with fitting apertures 26 in their joint surfaces in opposition to the spring-loaded pins 24. In this manner, spring-loaded pins 24 are brought into fitted in the fitting apertures 26 when the flanges 20 of the connecting units 16 are fitted in the recesses 22 of the core main bodies 14. When it is required to disassemble the annular core 12 into the core main bodies 14 and the connecting units 16, the connecting units 16 are pulled radially inwardly of the annular core 12 with a force in excess of a predetermined value to disengage the spring-loaded pins 24 from the fitting apertures 26.

The annular core 12 is repeatedly assembled and disassembled in forming green cases 10 and further may be heated in vulcanizing the green cases 10. Moreover, ply cords are wound around the annular core 12 under predetermined tension as described later. Therefore, the annular core 12 is preferably made of a light weight metal such as aluminum, titanium, their alloy or the like or a heat-resistant resin.

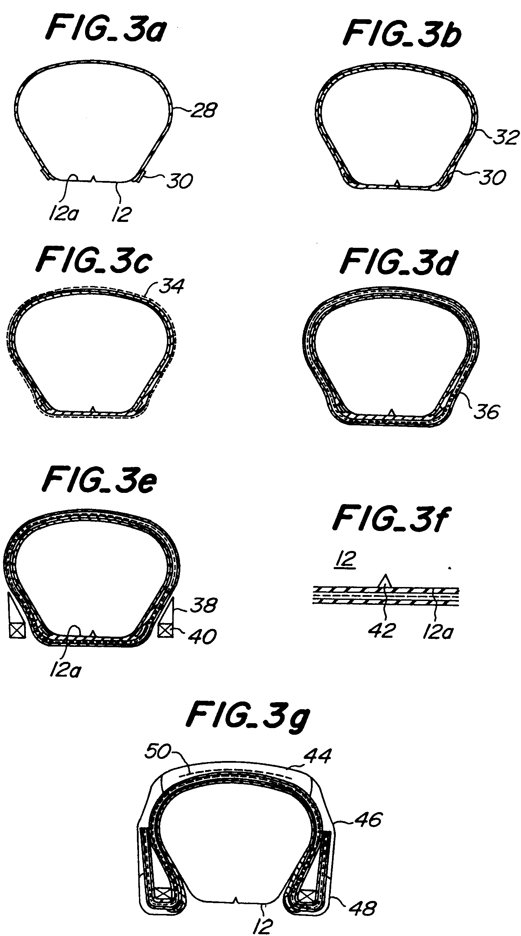

In the method according to the invention, on the outer circumference of the separable annular core 12 corresponding to the inner circumferential surface of a tire to be formed is arranged a predetermined member, for example, inner liner 28, which is positioned radially inwardly of a tire carcass, with exception of the radial inner portion 12a of the annular core 12 as shown in Fig. 3a. According to the specification of a tire to be formed, chafers 30 or the like are applied to the inner liner 28 at its portions corresponding to bead portions of the tire, while coating rubbers 32 are applied to the inner liner 28 around the closed annular axis of the annular core 12 as shown in Fig. 3b. The "closed annular axis" used herein is intended to mean a circular line substantially passing through centers of the core main bodies and the connecting units.

Thereafter, by means of a known winding apparatus (not shown), the annular core 12 is rotated about its longitudinal axis, while paying-out means for paying out a carcass ply cord 34 is rotated about the closed annular axis of the annular core 12, so that the carcass ply cord 34 is spirally wound on the outer circumference of the coating rubber 32 as shown in Fig. 3c. The ply cord 34 is shown in dash lines in Fig. 3c, in order to distinguish it from the coating rubber 32.

With the spiral winding in the above manner, it is of course possible to arrange the ply cord uniformly, and further possible to change tensile force of the ply cord, to change distances between the adjacent turns of the ply cords 34 by suitably selecting the winding speeds of the ply cords 34 and the rotating speed of the annular core 12 about its longitudinal axis, and to change angles between the wound cord and the equatorial plane of the annular core by arranging the longitudinal axis of the annular core 12 inclined relative to the pay-out means. Therefore, the influence of the ply on uniformity of the tire is considerably reduced, whereas the freedom of design is increased. Moreover, it is apparent from the above explanation that plural layers of ply cords may be wound around the annular core.

Coating rubbers 36 are then applied onto the spirally wound ply cords as shown in Fig. 3d. Thereafter, bead wires or bead wires having bead fillers 38 previously mounted thereon are arranged correspondingly to bead portions of the tire to be formed as shown in Fig. 3e.

The members such as carcass ply cords and the coating rubbers covering the radially inward portion 12a of the annular core 12 are cut along an imaginary circle substantially concentric to the closed annular axis of the annular core 12 by means of known cutting means. In this case, the radially inward portion 12a of the annular core 12 is preferably formed with a circular groove 42 extending concentrically to the closed annular axis of the annular core 12 as shown in Fig. 3f. By cutting along the circular groove 42, the cutting of the members covering the radially inward portion 12a of the annular core 12 can be easily performed.

On the other hand, the cut portions of the members are turned up around the bead wires 40 toward the crown portion of the annular core 12 to form the green case 10 as shown in Fig. 1. At this time, the radially inward portion of the green case is opening so that the connecting units 16 of the annular core 12 are drawn radially inwardly to disassemble the annular core 12. As a result, the core main bodies 14 and the connecting units 16 of the annular core 12 can then be removed from the green case 10. The green case 10 becomes a unitary body in this manner.

According to the method of the invention, therefore, in forming a green case, respective members constituting the green case are supported on its inside by the annular core 12 so that the members constituting the green case are substantially not deformed. Therefore, a green case of its constituent members arranged in predetermined positions, respectively, can be obtained according to the method of the invention.

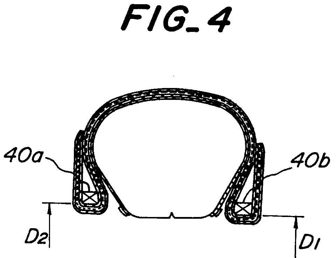

According to the method, moreover, even if a pair of bead wires concentrically arranged have different diameters ($D_1 \neq D_2$) as shown in Fig. 4, radial distances of turn-up portions of the cut members turned around the bead cores can be adjusted by cutting them at a location shifted from the equatorial plane of the annular core. Therefore, even the green case including such bead wires different in diameter can be formed with ease. It is of course that members covering the radially inward portion 12a of the annular core 12 may be cut at plural locations to adjust radial distances of turn-up portions turned around bead cores.

Furthermore, before the annular core 12 is removed from a green case 10, it is possible to apply members constituting outer portions of a tire, for example, a tread rubber 44, sidewalls 46, rim cushions 48 and the like and a tire reinforcement, such as a belt 50 onto a green case 10 to form a green tire 52 as shown in Fig. 3g. In this case, after disassembling and removing the annular core 12 from the green tire 52, it may be vulcanized by means of a known vulcanizing apparatus to form a tire. As an alternative, after vulcanizing the green tire 52 with the annular core 12 to form a tire, the annular core 12 may be removed from the tire.

With the tire formed by vulcanizing a green case or green tire having bead wires 40 different in diameter as shown in Fig. 4, the radial length of the sidewall at the side of the bead wire 40a having the larger diameter is less than that of the sidewall at the side of the bead wire 40b having the smaller diameter, so that the sidewall at the side of the bead wire 40a has a higher rigidity than the other sidewall. Therefore, if the tire is equipped on a vehicle so that the higher rigidity portion of the tire is on the side subjected to larger force upon cornering, the ground-contact property and the turning performance of the tire can be improved.

As described above, according to the invention the annular core is made separable, and tire constituent members applied around the annular core are cut at the radially inward portion of the annular core along a circle concentric to the circular axis thereof and whose cut portions are turned up around bead rings to form a green case. Therefore, the annular core can be easily disassembled and removed from the green case without damaging the inner liner forming the inner circumferential surfaces of the tire. Moreover, the annular core removed from the formed green case can be assembled and used again as an annular core for forming green cases. Further, with the annular core, tires having horseshoe-shaped radial cross-sections can be formed, to which conventional rims are applicable.

Moreover, the invention can use not only bead wires of conventional construction but also a pair of bead wires having different diameters. Therefore, the invention can provide green cases, green tires and hence complete tires to meet various specifications.

According to the invention, moreover, ply cords are spirally wound around the annular core having the shape substantially equal to an inner circumferential surface shape to form a ply which greatly affects on the tire uniformity. Therefore, cords are not disturbed in comparison with the conventional method using a flat drum. In addition, green cases or green tires can be formed without being radially expanded and contracted, so that tire constituent members are arranged in predetermined positional relationships in a tire. Accordingly, the invention can provide tires superior in uniformity.

It is further understood by those skilled in the art that the foregoing description is that of preferred embodiments of the disclosed tires and that various changes and modifications may be made in the invention without departing from the spirit and scope thereof.

**Claims**

1. A method of producing a green case by applying predetermined tire constituent members to an annular core having a radial cross-sectional shape substantially equal to the inner circumferential shape in radial cross-section of a tire to be formed, wherein the method comprises steps of applying predetermined tire constituent members (28) to be positioned radially inwardly of a carcass onto a dividable annular core (12), spirally winding a continuous carcass ply cord (34) around a closed annular axis of the annular core, applying a coating rubber (36) on the spirally wound carcass ply cord, applying bead wires (40) onto portions of the coating rubber on both sides of the equatorial plane of the annular core, cutting the above members applied to the annular core along the inner circumferential surface of the annular core, and turning up the cut portions of the members around the bead wires to form a green case (10).

2. A method as claimed in claim 1, characterized in that the members applied to the annular core (12) are cut along a circular groove (42) formed in the inner circumferential surface of the annular core and extending substantially concentric to the closed annular axis of the annular core.

3. A method as claimed in claim 1 or 2, characterized in that the cutting position of the members applied to the annular core is shifted corresponding to difference in diameters of the bead wires (40) to adjust radial distances of turn-up portions of the members turned around the bead wires.

4. A method as claimed in any of claims 1 to 3, characterized in that said annular core (12) comprises a plurality of core main bodies (14) and a plurality of connecting units (16) alternately arranged in a circle, and dovetail joints (18) provided on joint surfaces of the core main bodies and the connecting units extending in radial directions of the annular core.

5. A method as claimed in claim 4, characterized in that each of said connecting units (16) is tapered radially outwardly of the annular core (12).

6. A method as claimed in claim 4, characterized in that said dovetail joints (18) on both sides of at least one of the connecting units (16) are parallel to each other.

7. A method as claimed in claim 4, characterized in that said dovetail joints (18) on both sides of at least one of the connecting units (16) are tapered radially outwardly viewed from the dovetail joints of the core main bodies mating with said dovetail joints.

8. A method as claimed in any of claims 4 to 7, characterized in that each of the connecting units (16) is formed with a flange (20) on the arcuate radially inward portion forming part of the annular core, and the core main bodies (14) are formed with recesses (22) in positions corresponding to the flange of the connecting unit and having a shape in a mating fitting relationship with the flange.

9. A method as claimed in claim 8, characterized in that each of the connecting units (16) is provided at the flange (20) with spring-loaded pins (24) directing to joint surfaces of the adjacent core main bodies (14), while the core main bodies are formed with fitting apertures (26) in their joint surfaces in opposition to the spring-loaded pins (24), so that the spring-loaded pins are fitted in the fitting apertures when the flanges of the connecting units are fitted in the recesses (22) of the adjacent connecting units.

10. A method as claimed in any of claims 1 to 9, characterized in that said bead wires (40) are previously provided with bead fillers (38).

11. A method of producing a green tire, comprising producing a green case by the method as claimed in any of claims 1 to 10, and applying other tire constituent members such as sidewall rubbers (46) and a tread rubber (44) onto the green case (10) in predetermined positions to form a green tire (52).

12. A method as claimed in claim 11, characterized in that after applying other tire constituent members onto the green case to form a green tire, said annular core is disassembled and removed from the green tire and then the green tire is vulcanized to form a tire.

13. A method as claimed in claim 11, characterized in that after applying other tire constituent members onto the green case to form a green tire, the green tire is vulcanized without removing the annular core to form a tire and thereafter the annular core is disassembled and removed from the tire.

14. A tire produced by the method as claimed in any preceding claim.

FIG_1

FIG_2a

FIG_2b

FIG_2c

## FIG_3a

## FIG_3b

## FIG_3c

## FIG_3d

## FIG_3e

## FIG_3f

## FIG_3g

# FIG_4

40a

40b

D2

DI